# EUROPEAN PATENT SPECIFICATION

(11) **EP 3 209 912 B1**
(45) Date of publication and mention of the grant of the patent: **24.02.2021**
(21) Application number: 15804182.2
(22) Date of filing: 20.10.2015
(51) Int. Cl.: F16K 15/14, E03C 1/29, F16K 27/00, E03D 11/00, E03F 7/04, E03F 7/06

(54) **IMPROVED VALVE**
VERBESSERTES VENTIL
VANNE AMÉLIORÉE

(30) Priority: 20.10.2014 GB 201418620
(43) Date of publication of application: 30.08.2017
(73) Proprietor: McAlpine & Co Ltd., Glasgow, Strathclyde G52 4LF (GB)
(72) Inventor: MCALPINE, James Edward, Glasgow Strathclyde G52 4LF (GB)
(74) Representative: Creation IP Ltd
(86) International application number: PCT/GB2015/053123
(87) International publication number: WO 2016/063035

(56) References cited:
- EP-A1- 0 139 347
- EP-A1- 0 139 347
- FR-A1- 2 598 197
- FR-A1- 2 598 197
- US-A1- 2008 066 816
- US-A1- 2008 066 816
- US-A1- 2011 132 474
- US-A1- 2011 132 474

## Description

### Field of the Invention

The present invention relates to the technical field of plumbing, particularly, but not limited, to residential drainage fittings, although it can also find application in any kind of drainage conduction. The present invention is particularly suitable for easy connection of the drainage piping of a building and is especially suitable to prevent backflow, unpleasant odours in buildings and sewer creatures crawling up the drain pipes.

### Background to the Invention

One way in-line drain valves are commonly used nowadays for preventing backflow of drainage liquids, unpleasant odours migrating towards the interior of buildings and animals crawling up from the sewer system into buildings.

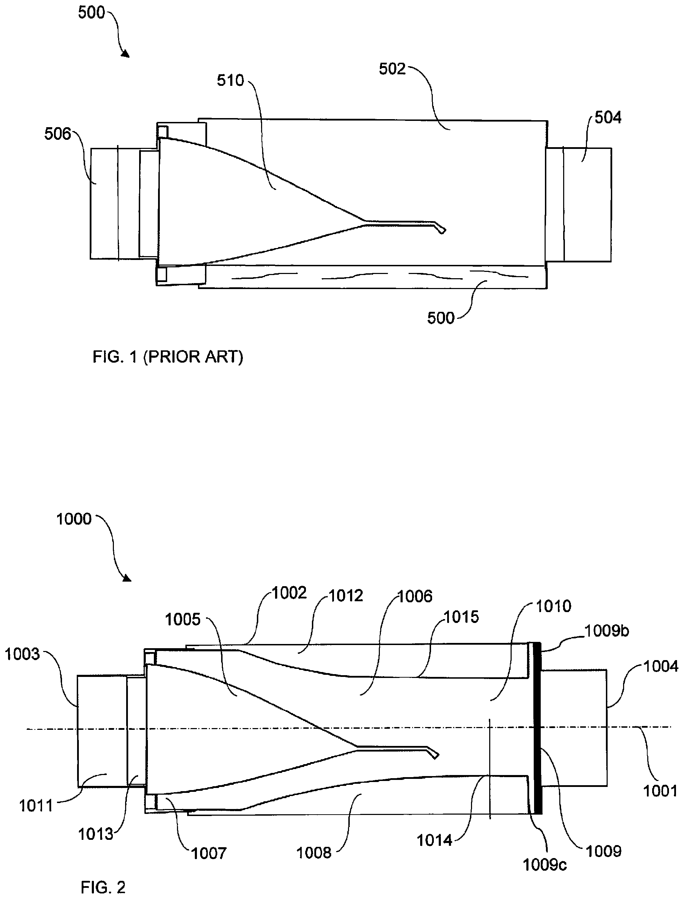

To accommodate the one-way valve 510 (See Figure 1), the in-line drain valve body 502 has to be wider than the downstream pipe 504 and the upstream pipe 506 to which it is connected. When the in-line drain valve is used in a vertical orientation this is of no consequence, however, when the inline drain valve 500 is used in a partially or fully horizontal orientation, liquid 508 flowing through the valve may gather in the wider section of the in-line drain valve body 502. This phenomenon is known as puddling in the valve and is perceived as an undesirable feature of in-line drain valve connections.

To solve the problem of puddling, in-line drain valves have been developed wherein the valve outlet is offset from the valve symmetry axis so that one side of the valve body is common to the outlet and there is no step in which liquid can remain trapped and produce puddling.

However, this solution requires that the valve must be rotationally oriented so that the outlet and valve body common side is in the lowest possible position, when the valve is not essentially vertically positioned.

This drawback can be solved by providing an independently rotatable threaded flange section at one end of the valve body. However, this independently rotatable threaded section is a potential source of leaks and odours and it is not an hermetic closure.

EP 0 139 347 relates to a valve assembly that permits free flow in one direction and prevents flow from an opposing second direction. The valve includes a housing and a flow regulator, in the form of a duckbill valve member. The duckbill valve is secured within the housing, which includes an insert including an outlet end that is shaped to conform to the shape of the closed end of the duckbill valve.

### Summary of the Invention

According to a first aspect of the invention there is provided an in-line valve as recited in claim 1.

In at least one embodiment of the invention, by providing an in-line drain valve with an insert that comprises a first side and a second opposite side that funnel the flow path between the valve body inlet and the valve body outlet to an equal or narrower dimension than the valve body outlet, the in-line drain one-way valve can be installed to avoid puddling much more easily and hermetically than with prior art systems. In particular, the in-line valve can be installed in two different rotational orientations in which puddling is avoided, whereas in prior art systems, only one valve rotational orientation is able to prevent puddling.

Preferably the insert inlet is equal or larger than the valve body inlet. In at least one embodiment of the present invention, an insert with an inlet with the same or larger dimensions than the valve body inlet guarantees that no puddling can take place upstream of the insert.

Preferably the insert outlet is equal or smaller than the valve body outlet.

In at least one embodiment of the present invention, an insert with an outlet with the same or smaller dimensions than the valve body outlet guarantees that no puddling can take place within the valve body or within the insert

The insert inlet comprises a flange. The insert outlet comprises a flange at least partially surrounding the insert outlet. According to the present invention by providing flanges to the insert inlet and the insert outlet enables the insert to define a more hermetic flow path between the valve body inlet and the valve body outlet because then it is easier for the insert to engage with the valve body inlet and valve body outlet.

The inline valve may comprise a seal between the flange at least partially surrounding the insert outlet and the valve body. In at least one embodiment of the present invention a seal placed between the flange at least partially surrounding the insert outlet and the valve body effectively seals the gap between the insert outlet and the valve body and avoids leaks towards the valve body from inside the insert.

Preferably the valve body comprises two portions; an inlet portion and an outlet portion. The inlet portion and the outlet portion may be engageable between them.

In at least one of the embodiments of the present invention, a valve body comprising two portions engageable between them facilitates the assembling of the valve.

According to the present invention, when the insert inlet or its flange is engageable with the valve body and/or when the insert outlet or its flange is engageable with the valve body, it is less likely that, in use, liquid leaks from the interior of the insert towards the valve body.

Optionally the insert outlet may extend into the valve body outlet.

In at least one embodiment of the present invention when the insert outlet extends into the valve body outlet it is less likely that, in use, liquid leaks from the insert interior towards the valve body.

Part of the duckbill valve may be secured between the insert inlet and the valve body.

In at least one embodiment of the present invention when the duckbill valve is secured between the insert inlet and the valve body, it is less likely that, in use, liquid leaks from the interior of the insert towards the valve body.

### Brief Description of the Drawings

Embodiments of the present invention will now be described, by way of example only, with reference to the accompanying drawings, in which:
Figure 1 shows a side view of an in-line one-way drain valve as encountered in the prior art with accumulated liquid within the valve body.
Figure 2 shows a side view of an improved in-line one way drain valve according to an example, not forming part of the present invention.
Figure 3 shows a perspective view of a further example, not forming part of the invention.
Figure 4 shows a perspective view of an example of the invention.
Figure 5 shows a perspective view of a further example of the invention.
Figure 6 shows a perspective view of a further example of the invention.

### Detailed Description of the Drawings

Referring to Fig. 2 an example, not forming part of the present invention will be described.

This example is an in-line valve 1000. The in-line valve 1000 comprises a valve body 1002. The valve body 1002 comprises a valve body inlet 1003 and a valve body outlet 1004. The valve body inlet 1003 and the valve body outlet 1004 have a common longitudinal axis 1001 with the valve body 1002. The valve body 1002 defines a chamber 1008 and the chamber 1008 has a cross-sectional area larger than the cross-sectional area of the valve body outlet 1004. The in-line valve 1000 further comprises a duckbill valve 1005. The duckbill valve 1005 has an inlet and an outlet. The in-line valve 1000 further comprises an insert 1006. The insert 1006 has an inlet 1007 and an outlet 1009. The insert 1006 is located within the chamber 1008 and is adapted to house the duckbill valve 1005. The insert 1006 defines a flow path 1010 between the valve body inlet 1003 and the valve body outlet 1004 such that a first side 1014 and a second opposite side 1015 of the insert 1006 funnel the flow path 1010 to an equal or narrower dimension than the valve body outlet 1004.

In this example the valve body 1002 comprises two portions: an inlet portion 1011 and an outlet portion 1012. The outlet portion 1012 can be threaded onto the inlet portion 1011. This facilitates the assembling of the inline valve 1000.

The assembling of the in-line valve comprises the following sequence: first, the duckbill 1005 valve is fitted onto a support 1013. Then, the support 1013 and duckbill valve 1005 are inserted into the valve body inlet portion 1011. Then the insert 1006 is placed into the valve body inlet portion 1011, surrounding the duckbill valve 1005. Finally the valve body outlet portion 1012 is threaded onto the valve body inlet portion 1011.

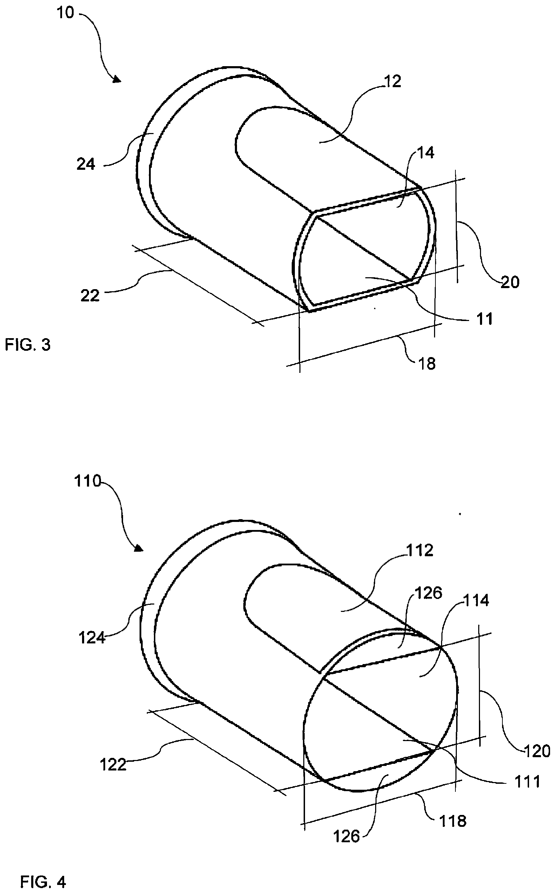

Referring to Fig. 3 an insert for an in-line one way drain valve will be described. The insert 10 has an inlet (not visible) and an outlet 14. The insert 10 defines a flow path between the inlet (not visible) and the outlet 14. A first side 11 and a second opposite side 12 of the insert funnel the flow path to an equal dimension than the outlet 14.

The insert 10 is made of rigid polypropylene (PP) by extrusion and blow moulding although other materials and fabrication techniques may be used.

The insert inlet (not visible) is 40 mm of internal diameter, the insert has a maximum width 18 of 40 mm and a minimum width 20 of 20 mm towards the insert outlet 14. The insert outlet 14 has also a maximum width of 40 mm and a minimum width of 20 mm.

The insert inlet (not visible) has a flange 24 of 46 mm of diameter and is 8 mm long.

The insert length 22 is 120 mm and the insert wall thickness is 1.5 mm.

Other dimensions may be used without departing from the principles of the invention.

Referring now to Fig. 4 another insert 110 for an in-line one way drain valve will be described.

Features in Fig. 4 equivalent to those of Fig. 3 are identified by the same numerals incremented by 100.

This embodiment is similar to the embodiment of Fig. 3 but in this case, the insert outlet 114 has two flange sections 126 that together with the insert outlet 114 form a circle with the same diameter than the interior of the in-line one way drain valve. This shape at the insert outlet 114 enhances the engageability of the insert 110 with an in-line valve.

Other dimensions may be used without departing from the principles of the invention.

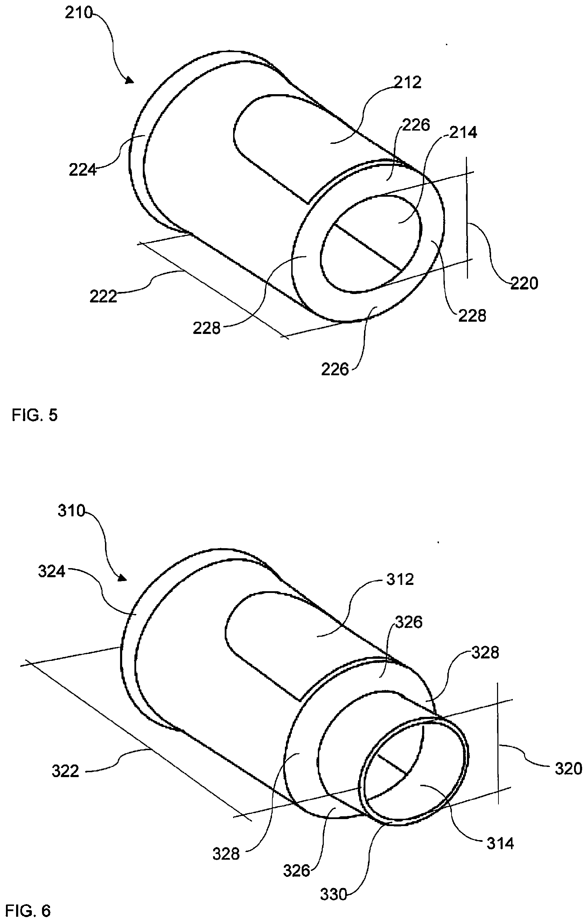

Referring now to Fig. 5 another insert for an in-line one way drain valve will be described.

Features in Fig. 5 equivalent to those of Figure 3 are identified by the same numerals incremented by 200.

This embodiment is similar than the embodiment of Figure 4 but in this case, the insert outlet 214 also has two adjacent portions of material 228 that restrict its dimensions to a circle of 20 mm of diameter. These reduced dimensions of the insert outlet 214 reduce the likelihood of leaks towards the in-line valve body.

Other dimensions may be used without departing from the principles of the invention.

Referring now to Fig. 6 another insert for an in-line one way drain valve will be described.

Features in Fig. 6 equivalent to those of Figure 3 are identified by the same numerals incremented by 300.

This embodiment is similar than the embodiment of Figure 5 but this embodiment comprises a tubular protrusion 330 that can be fitted into an inline one way drain valve outlet and therefore it is less likely that, in use, liquid flowing through the insert leaks into the in-line valve body. The insert length 322 is 140 mm.

Other dimensions may be used without departing from the principles of the invention.

## Claims

1. An in-line valve comprising:
a valve body (1002) comprising a valve body inlet (1003) and a valve body outlet (1004), the valve body inlet (1003) and the valve body outlet (1004) having a common longitudinal axis with the valve body (1002), the valve body (1002) defining a chamber (1008), the chamber (1008) having a cross-sectional area larger than the cross-sectional area of the valve body outlet (1004);
a duckbill valve, the duckbill valve (1005) having an inlet and an outlet; and
an insert (110; 210;310), the insert (110; 210;310) having an inlet and an outlet, the insert (110; 210;310) being located within the chamber (1008), and being adapted to house the duckbill valve (1005), the insert (110; 210;310) defining a flow path (1010) between the valve body inlet (1003) and the valve body outlet (1004), such that a first side and a second opposite side of the insert (110; 210;310) funnel the flow path to an equal or narrower dimension than the valve body outlet (1004);
**characterised in that**:
the insert inlet comprises a flange (124; 224; 324), the insert outlet (114; 214;314) comprises another flange (126; 226; 326) at least partially surrounding the insert outlet (114; 214; 314) such that a hermetic flow path is provided between the valve body inlet (1003) and the valve body outlet (1004).

2. An in-line valve according to claim 1 wherein the insert inlet is equal or larger than the valve body inlet (1003).

3. An in-line valve according to claim 1 or claim 2 wherein the insert outlet is equal or smaller than the valve body outlet (1004).

4. An in line valve according to any preceding claim comprising a seal between the flange (126; 226; 326) of the insert outlet (114; 214; 314) and the valve outlet end (1004) of the valve body (1002).

5. An in-line valve according to any preceding claim wherein the valve body (1002) comprises two portions: an inlet portion (1011) and an outlet portion (1012) wherein the outlet portion (1012) can be threaded onto the inlet portion (1011).

6. An in-line valve according to any preceding claim wherein the insert outlet includes a tubular protrusion (314) extending from the outlet end of the insert (1006) and, wherein the tubular protrusion (314) is configured to extend into the valve body outlet (1004).

7. An in-line valve according to any preceding claim wherein part of the duckbill valve is secured between the insert inlet and the valve body (1002).

## Patentansprüche

1. Inline-Ventil, umfassend:
einen Ventilkörper (1002), umfassend einen Ventilkörpereinlass (1003) und einen Ventilkörperauslass (1004), wobei der Ventilkörpereinlass (1003) und der Ventilkörperauslass (1004) eine gemeinsame Längsachse mit dem Ventilkörper (1002) aufweisen, wobei der Ventilkörper (1002) eine Kammer (1008) definiert, die Kammer (1008) eine Querschnittsfläche aufweist, die größer als die Querschnittsfläche des Ventilkörperauslasses (1004) ist;
ein Entenschnabelventil, wobei das Entenschnabelventil (1005) einen Einlass und einen Auslass aufweist; und
einen Einsatz (110; 210; 310), wobei der Einsatz (110; 210; 310) einen Einlass und einen Auslass aufweist, wobei der Einsatz (110; 210; 310) in der Kammer (1008) liegt und ausgebildet ist, das Entenschnabelventil (1005) aufzunehmen, wobei der Einsatz (110; 210; 310) einen Strömungsweg (1010) zwischen dem Ventilkörpereinlass (1003) und dem Ventilkörperauslass (1004) definiert, sodass eine erste Seite und eine zweite gegenüberliegende Seite des Einsatzes (110; 210; 310) den Strömungsweg zu einer gleichen oder kleineren Abmessung als der Ventilkörperauslass (1004) trichtern;
**dadurch gekennzeichnet, dass**:
der Einsatzeinlass einen Flansch (124; 224; 324) umfasst, der Einsatzauslass (114; 214; 314) einen anderen Flansch (126; 226; 326) umfasst, der mindestens teilweise den Einsatzauslass (114; 214; 314) umgibt, sodass ein hermetischer Strömungsweg zwischen dem Ventilkörpereinlass (1003) und dem Ventilkörperauslass (1004) bereitgestellt ist.

2. Inline-Ventil nach Anspruch 1, wobei der Einsatzeinlass gleich oder größer als der Ventilkörpereinlass (1003) ist.

3. Inline-Ventil nach Anspruch 1 oder Anspruch 2, wobei der Einsatzauslass gleich oder kleiner als der Ventilkörperauslass (1004) ist.

4. Inline-Ventil nach einem vorstehenden Anspruch, umfassend eine Dichtung zwischen dem Flansch (126; 226; 326) des Einsatzauslasses (114; 214; 314) und dem Ventilauslassende (1004) des Ventilkörpers (1002).

5. Inline-Ventil nach einem vorstehenden Anspruch, wobei der Ventilkörper (1002) zwei Abschnitte umfasst: einen Einlassabschnitt (1011) und einen Auslassabschnitt (1012), wobei der Auslassabschnitt (1012) auf den Einlassabschnitt (1011) geschraubt werden kann.

6. Inline-Ventil nach einem vorstehenden Anspruch, wobei der Einsatzauslass einen rohrförmigen Fortsatz (314) beinhaltet, der sich von dem Auslassende des Einsatzes (1006) erstreckt, und wobei der rohrförmige Fortsatz (314) gestaltet ist, sich in den Ventilkörperauslass (1004) zu erstrecken.

7. Inline-Ventil nach einem vorstehenden Anspruch, wobei Teil des Entenschnabelventils zwischen dem Einsatzeinlass und dem Ventilkörper (1002) befestigt ist.

## Revendications

1. Vanne en ligne comprenant :
un corps de vanne (1002) comprenant une entrée de corps de vanne (1003) et une sortie de corps de vanne (1004), l'entrée de corps de vanne (1003) et la sortie de corps de vanne (1004) présentant un axe longitudinal commun avec le corps de vanne (1002), le corps de vanne (1002) définissant une chambre (1008), la chambre (1008) présentant une section transversale plus grande que la section transversale de la sortie de corps de vanne (1004) ;
une vanne à bec de canard, la vanne à bec de canard (1005) présentant une entrée et une sortie ; et
un insert (110 ; 210 ; 310), l'insert (110 ; 210 ; 310) présentant une entrée et une sortie, l'insert (110 ; 210 ; 310) étant situé à l'intérieur de la chambre (1008), et étant conçu pour loger la vanne à bec de canard (1005), l'insert (110 ; 210 ; 310) définissant un trajet d'écoulement (1010) entre l'entrée de corps de vanne (1003) et la sortie de corps de vanne (1004), de telle sorte qu'un premier côté et un second côté opposé de l'insert (110; 210; 310) canalisent le trajet d'écoulement vers une dimension égale ou plus étroite que la sortie du corps de vanne (1004) ;
**caractérisée en ce que** :
l'entrée d'insert comprend une bride (124 ; 224 ; 324), la sortie d'insert (114 ; 214 ; 314) comprend une autre bride (126 ; 226 ; 326) entourant au moins en partie la sortie d'insert (114 ; 214 ; 314) de telle sorte qu'un trajet d'écoulement hermétique est prévu entre l'entrée de corps de vanne (1003) et la sortie de corps de vanne (1004).

2. Vanne en ligne selon la revendication 1 dans laquelle l'entrée d'insert a une taille supérieure ou égale à l'entrée de corps de vanne (1003).

3. Vanne en ligne selon la revendication 1 ou la revendication 2 dans laquelle la sortie d'insert a une taille inférieure ou égale à la sortie de corps de vanne (1004).

4. Vanne en ligne selon une quelconque revendication précédente comprenant un joint entre la bride (126 ; 226 ; 326) de la sortie d'insert (114 ; 214 ; 314) et l'extrémité de sortie de vanne (1004) du corps de vanne (1002).

5. Vanne en ligne selon une quelconque revendication précédente dans laquelle le corps de vanne (1002) comprend deux parties : une partie entrée (1011) et une partie sortie (1012) dans laquelle la partie sortie (1012) peut être filetée sur la partie entrée (1011).

6. Vanne en ligne selon une quelconque revendication précédente dans laquelle la sortie d'insert inclut une saillie tubulaire (314) s'étendant entre l'extrémité sortie de l'insert (1006) et dans laquelle la saillie tubulaire (314) est configurée pour s'étendre dans la sortie de corps de vanne (1004).

7. Vanne en ligne selon une quelconque revendication précédente dans laquelle une partie vanne en bec de canard est fixée entre l'entrée d'insert et le corps de vanne (1002).
